# FASCICULE DE BREVET EUROPEEN

(11) **EP 2 225 129 B1**
(45) Date de publication et mention de la délivrance du brevet: **01.02.2012**
(21) Numéro de dépôt: 08862837.5
(22) Date de dépôt: 17.12.2008
(51) Int. Cl.: B60S 1/38, B60S 1/40

(54) **BALAI D'ESSUIE-GLACE DOTE D'UN CONNECTEUR ET PROCEDE DE FABRICATION D'UN TEL BALAI**
WISCHERBLATT MIT VERBINDER UND HERSTELLUNGSVERFAHREN FÜR EIN SOLCHES BLATT
WIPER BLADE WITH CONNECTOR AND METHOD FOR MAKING SUCH BLADE

(30) Priorité: 18.12.2007 FR 0708810
(43) Date de publication de la demande: 08.09.2010
(73) Titulaire: Valeo Systèmes d'Essuyage, 78321 La Verrière (FR)
(72) Inventeur: OLLIER, Nicolas, F-43700 Arsac En Velay (FR)
(74) Mandataire: Rosolen-Delarue, Katell
(86) Numéro de dépôt international: PCT/EP2008/067755
(87) Numéro de publication internationale: WO 2009/077563

(56) Documents cités:
- WO-A-02/34595
- FR-A- 2 868 376
- FR-A- 2 894 544

## Description

La présente invention concerne un balai d'essuie-glace dont la structure intègre un connecteur chargé de son raccordement à un bras d'essuyage.

L'invention est également relative à un procédé de fabrication d'un tel balai d'essuie-glace.

L'invention trouve une application particulièrement avantageuse dans le domaine des balais d'essuie-glace plats qui sont communément désignés par l'anglicisme "flat blade".

Un balai d'essuie-glace plat est essentiellement composé d'une lame d'essuyage souple qui est supportée par une structure déformable dans laquelle est intégrée une vertèbre flexible, et sur laquelle est fixé un connecteur permettant de relier le balai plat à un quelconque mécanisme d'entraînement. A cet égard, on connaît notamment un balai d'essuie-glace plat dans lequel le connecteur est solidarisé à la structure support par emboîtement transversal et verrouillage en position via la vertèbre.

Concrètement, les deux côtés longitudinaux de la structure support sont dotés d'ouvertures laissant apparaître les bords latéraux de la vertèbre qui est insérée à l'intérieur. Le connecteur est quant à lui pourvu d'un logement interne ayant une forme sensiblement complémentaire de celle de la portion ajourée de la structure support.

Les parties du connecteur, qui sont destinées à être engagées au niveau des ouvertures, se présentent sous la forme de griffes. Leur encombrement général n'est compatible pour un emboîtement, qu'avec la seule portion ajourée de la structure support, tandis que leur forme interne est sensiblement complémentaire de la forme externe résultant de l'association de la structure support et de la vertèbre au niveau d'une ouverture. L'ensemble est agencé de manière à ce qu'une fois insérée dans la structure support, la vertèbre bloque le connecteur suivant sa direction d'emboîtement ; les bords latéraux de ladite vertèbre jouant alors le rôle de butées vis-à-vis des griffes dudit connecteur.

Ce type de montage présente toutefois l'inconvénient de procurer un maintien insuffisant de la vertèbre au niveau du connecteur. Un jeu d'assemblage est en effet nécessaire pour permettre l'insertion de la vertèbre entre les griffes du connecteur. Dans ces conditions, il est impossible pour le balai d'essuie-glace d'offrir suffisamment de rigidité pour remplir les exigences, en terme de pivotement latéral et de torsion longitudinale, des cahiers des charges de nombre de constructeurs automobiles.

Aussi, le problème technique à résoudre par l'objet de la présente invention, est de proposer un balai d'essuie-glace comportant une structure support dans laquelle est insérée longitudinalement une vertèbre flexible, et sur les côtés de laquelle sont ménagées des ouvertures laissant apparaître les bords latéraux de la vertèbre, ainsi qu'un connecteur qui est emboîté sensiblement transversalement sur la structure support au niveau des ouvertures, et qui est bloqué en déplacement suivant sa direction d'emboîtement par les portions de bords latéraux qui dépassent desdites ouvertures, balai d'essuie-glace qui permettrait d'éviter les problèmes de l'état de la technique en offrant au niveau du connecteur, un maintien sensiblement amélioré de la vertèbre.

La solution au problème technique posé consiste, selon la présente invention, en ce que le connecteur comporte au moins une déformation s'étendant à l'intérieur d'une encoche qui est ménagée sur la vertèbre au niveau d'une portion de bord latéral accessible via une ouverture.

Pour maintenir la vertèbre au niveau du connecteur, le principe consiste donc à utiliser un vertèbre particulière en ce sens qu'elle dispose d'une ou plusieurs encoches sensiblement en partie centrale, et à déformer localement toute portion du connecteur s'étendant en regard d'une encoche. Chaque déformation est conduite jusqu'à ce que suffisamment de matière se soit accumulée au sein de l'encoche correspondante, pour générer le blocage de la vertèbre à l'intérieur de la structure support. Un tel blocage doit être considéré comme omnidirectionnel puisque qu'il est notamment en mesure d'immobiliser la vertèbre en translation suivant sa direction d'insertion, et de supprimer le jeu d'assemblage entre ladite vertèbre et le connecteur.

L'invention telle qu'ainsi définie présente l'avantage de conférer au connecteur une capacité de maintien de la vertèbre, qui est bien supérieure à celles de ses homologues de l'état de la technique. De manière général, cela procure une qualité d'essuyage accrue au balai d'essuie-glace, et en particulier, cela permet d'être conforme aux cahiers des charges des constructeurs automobiles.

La présente invention concerne également les caractéristiques qui ressortiront au cours de la description qui va suivre, et qui devront être considérées isolément ou selon toutes leurs combinaisons techniques possibles.

Document FR-A-2894544 montre un balai comme décrit dans le préambule de revendication 1.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:

La figure 1 illustre un balai d'essuie-glace plat conforme à l'invention.

La figure 2 est un éclaté d'une portion du balai d'essuie-glace visible à la figure 1.

La figure 3 montre le connecteur en cours de montage sur le corps du balai d'essuie-glace.

La figure 4 fait apparaître le connecteur en fin de phase de montage sur le corps du balai d'essuie-glace.

La figure 5 est une coupe transversale du balai d'essuie-glace entièrement assemblé, qui est réalisée au centre du connecteur.

La figure 6 constitue un éclaté en perspective de dessous, qui dévoile la conformation interne du connecteur lorsque ce dernier est solidarisé au corps du balai d'essuie-glace.

La figure 7 est en vue similaire à la figure 6, mais en perspective de dessus.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

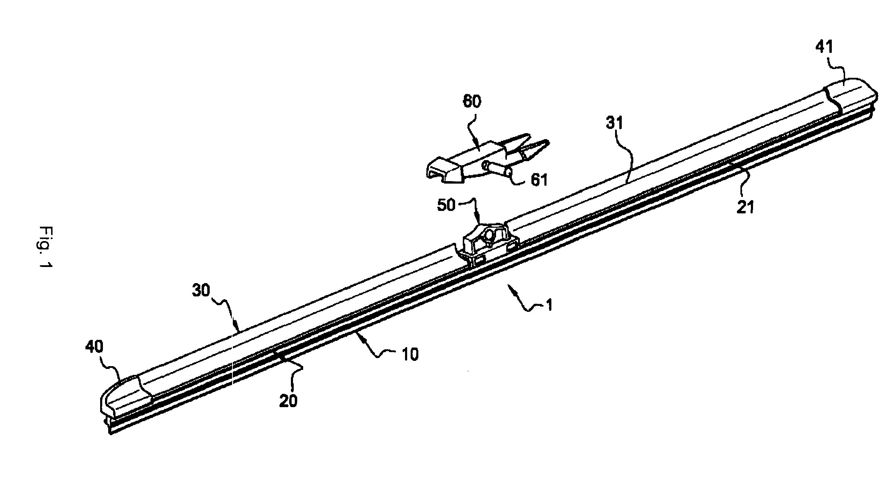

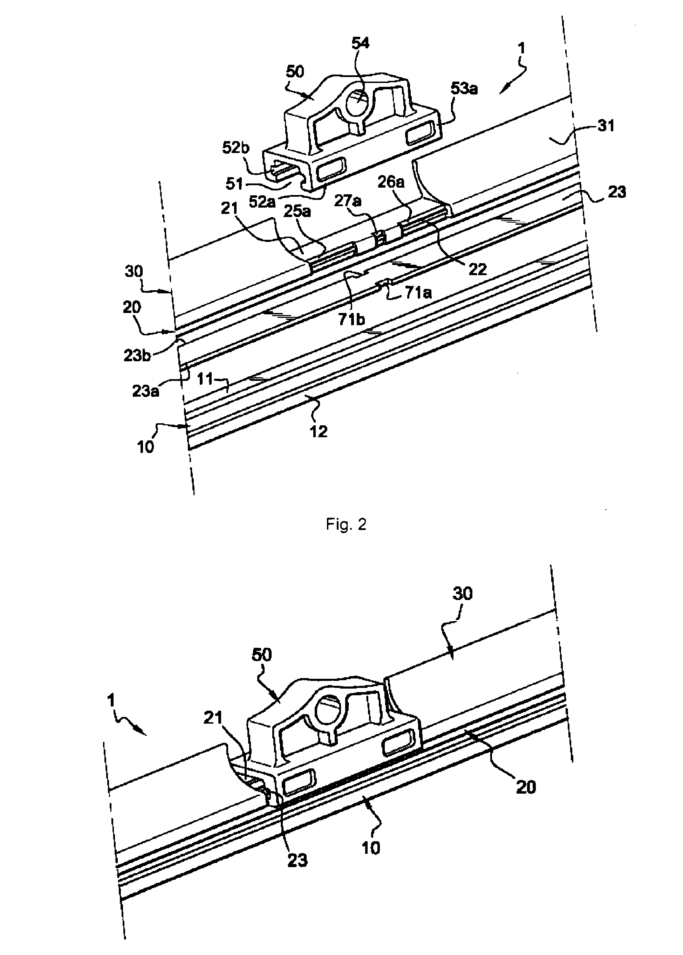

Les figures 1 et 2 représente un balai plat 1 qui est destiné à équiper un dispositif d'essuie-glace de véhicule automobile. De manière classique, et ainsi qu'on peut le voir plus clairement sur l'éclaté de la figure 2, le balai plat 1 est essentiellement composé d'une lame d'essuyage 10, d'une structure support 20, d'un spoiler 30, de deux éléments d'assemblage 40, 41, et d'un connecteur 50.

Concrètement, la lame d'essuyage 10 est constituée par un profilé souple en élastomère, qui est principalement composé d'un talon 11 et d'une lèvre 12 articulés entre eux par l'intermédiaire d'une portion de moindre section, formant charnière (figure 2).

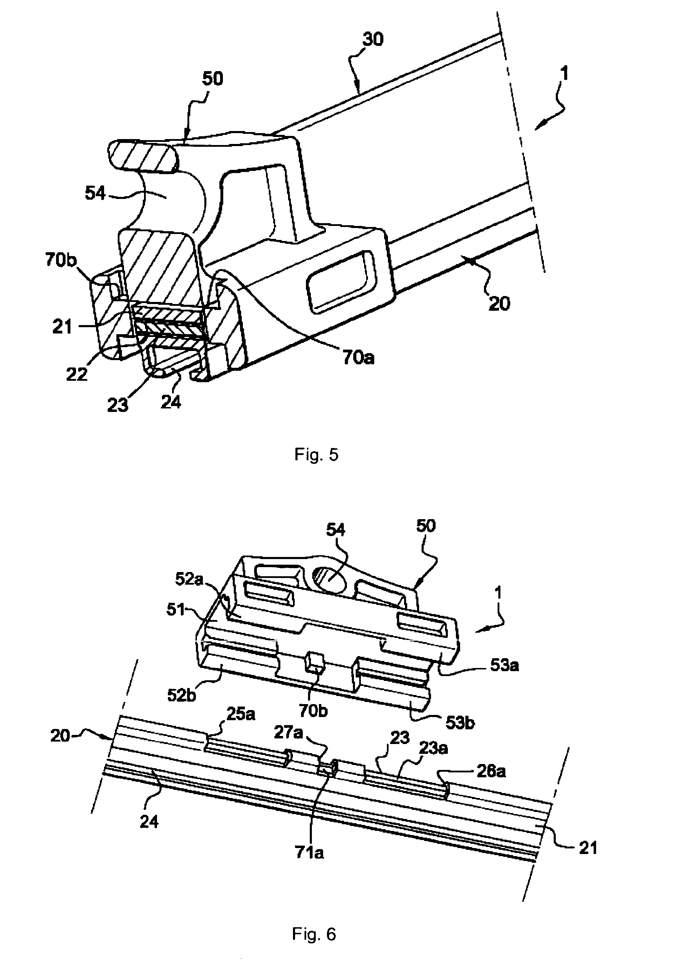

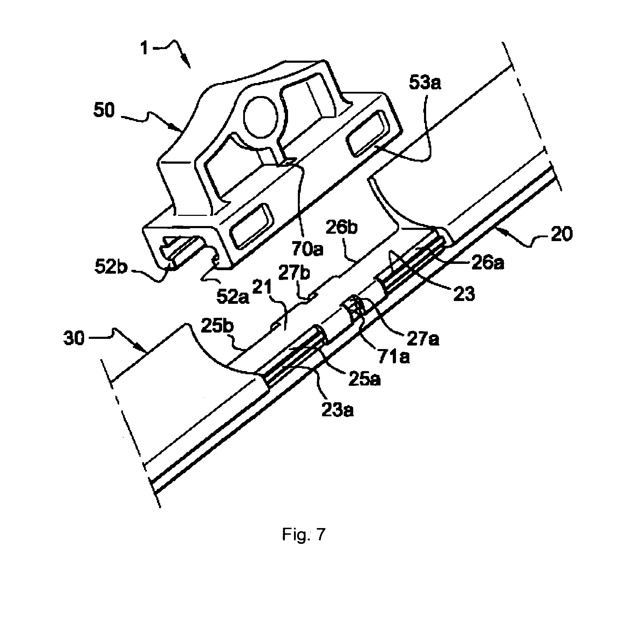

La structure support 20 se présente quant à elle sous la forme d'un profilé en plastique 21 qui intègre longitudinalement d'une part un logement interne 22 dans lequel est insérée une vertèbre métallique 23 (figure 5), et d'autre part un rail de maintien 24 (figures 5 et 6) dans lequel prend place le talon 11 de la lame d'essuyage 10. Trois ouvertures 25a, 25b, 26a, 26b, 27a, 27b sont par ailleurs ménagées à travers chaque côté du profilé 21, de telle sorte que lorsque la vertèbre 23 est insérée dans le logement interne 22, les bords latéraux 23a, 23b de ladite vertèbre 23 dépassent desdites ouvertures 25a, 25b, 26a, 26b, 27a, 27b (figures 6 et 7).

Le spoiler 30 est lui aussi constitué par un profilé 31, mais celui-ci est réalisé en élastomère et il est solidarisé à la partie supérieure du profilé 21 de ia structure support 20 ou directement réalisé avec le profilé 21 par coextrusion.

Les deux éléments d'assemblage 40,41 sont ici totalement identiques. De manière classique, chacun d'entre eux est conformé afin de pouvoir, d'une part, s'emboîter à une extrémité de la structure support 20, et d'autre part, se clipper directement sur la vertèbre 23.

Le connecteur 50 est quant à lui agencé de manière à pouvoir s'emboîter sensiblement transversalement sur la structure support 22 au niveau des ouvertures 25a, 25b, 26a, 26b, et être bloqué en déplacement suivant sa direction d'emboîtement par les portions de bords latéraux 23a, 23b qui dépassent desdites ouvertures 25a, 25b, 26a, 26b.

Pour cela, et ainsi qu'on peut le voir notamment aux figures 2 et 6, le connecteur 50 est tout d'abord doté d'un logement interne 51 qui présente une forme sensiblement complémentaire de celle de la portion ajourée de la structure support 20, c'est-à-dire de la partie du profilé 21 sur laquelle sont ménagées les ouvertures 25a, 25b, 26a, 26b, 27a, 27b.

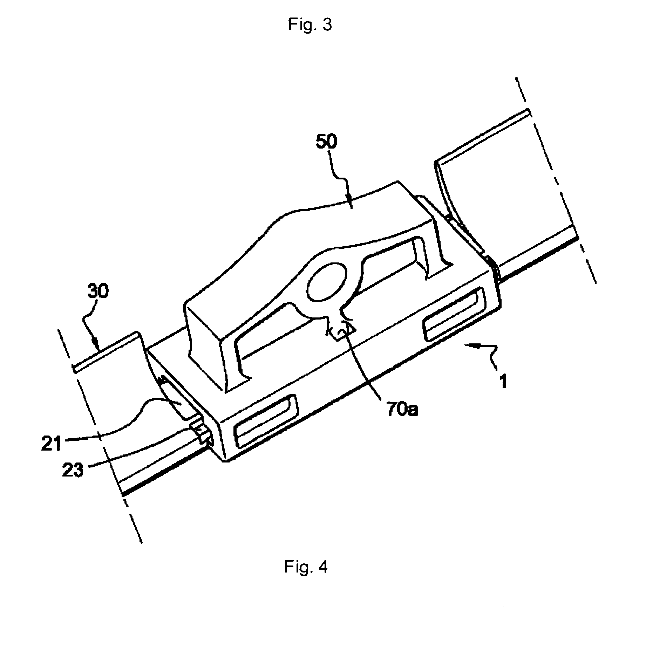

Mais le connecteur 50 est également pourvu de quatre griffes 52a, 52b, 53a, 53b qui sont à même d'être engagées au niveau des ouvertures 25a, 25b, 26a, 26b (figures 6 et 7). Leur encombrement général n'est en effet compatible pour un emboîtement, qu'avec la seule portion ajourée de la structure support 20, tandis que leur forme interne est sensiblement complémentaire de la forme externe résultant de l'association du profilé 21 et de la vertèbre 23 au niveau d'une ouverture 25a, 25b, 26a, 26b. L'ensemble est agencé de façon à ce qu'une fois insérée dans le profilé 21, la vertèbre 23 bloque le connecteur 50 suivant sa direction d'emboîtement (figures 3 à 5) ; les bords latéraux 23a, 23b de ladite vertèbre 23 jouant alors le rôle de butées vis-à-vis des griffes 52a, 52b, 53a, 53b dudit connecteur 50.

Afin de permettre le montage du balai 1 à l'extrémité d'un bras d'un mécanisme d'entraînement, le connecteur 50 est associé à un adaptateur 60 qui est monté pivotant par rapport à lui par l'intermédiaire d'un axe 61, et qui constitue la partie male d'un moyen de fixation réversible ; la partie femelle complémentaire étant ménagée à l'extrémité du bras du mécanisme d'entraînement. Un aiésage traversant 54, formant palier, est ménagé sur le connecteur 50 afin de recevoir l'axe 61.

Conformément à l'objet de la présente invention, le connecteur 50 comporte deux déformations 70a, 70b s'étendant chacune à l'intérieur d'une encoche 71 a, 71 b qui est ménagée sur la vertèbre 23, au niveau d'une portion de bord latéral 23a, 23b directement accessible depuis une ouverture 27a, 27b (figures 4 à 7).

Selon une particularité de l'invention, au moins une encoche 71 a, 71 b est ménagée sur chaque bord latéral 23a, 23b de la vertèbre 23, et une déformation s'étend à l'intérieur de chaque encoche 71 a, 71 b.

Cette caractéristique permet de renforcer le maintien de la vertèbre 23 dans le connecteur 50. Des déformations 70a, 70b sont en effet présentes des deux côtés du connecteur 50, de sorte que des blocages sont générés simultanément de part et d'autre de la vertèbre 23.

Selon une autre particularité de l'invention, au moins deux encoches 71 a, 71 b symétriques l'une par rapport à l'autre sont respectivement ménagées sur chaque bord latéral 23a, 23b de la vertèbre 23, et une déformation 70a, 70b s'étend à l'intérieur de chaque encoche 71 a, 71 b.

Un tel agencement permet quant à lui d'optimiser encore plus le maintien de la vertèbre 23 par le connecteur 50, grâce à une répartition homogène des déformations 70a, 70b, et donc des forces de blocage, de part et d'autre de la vertèbre 23.

Conformément à un mode de réalisation actuellement préféré de l'invention, chaque encoche 71 a, 71 b de la vertèbre 23 est ménagée en regard d'une ouverture 27a, 27b exclusivement dédiée à son accès (figures 6 et 7).

Cela signifie en d'autres termes que chaque ouverture 27a, 27b ne participe en rien à l'emboîtement et au positionnement du connecteur 50 sur la structure support 20, et que sa seule fonction est de permettre à une portion du connecteur 50 de se déformer à travers le profilé 21 jusqu'à atteindre l'intérieur de l'encoche 71 a, 71 b correspondante.

Cette solution permet quoi qu'il en soit de dissocier avantageusement l'emboîtement du connecteur 50 et le maintien de la vertèbre 23, pour une meilleure efficacité de chacune de ces deux fonctions considérées isolément. Mais bien évidemment, il demeure tout à fait envisageable d'utiliser une vertèbre 23 disposant d'encoches 71a, 71b s'étendant en regard des ouvertures 25a, 25b, 26a, 26b dédiées à l'emboîtement du connecteur 50, et de réaliser les déformations directement à partir des griffes 52a, 52b, 53a, 53b.

De manière particulièrement avantageuse, chaque encoche 71 a, 71b de la vertèbre 23 présente une taille sensiblement identique à celle de l'ouverture 27a, 27b qui lui est associée (figures 6 et 7).

Cette caractéristique permet lorsqu'une déformation 70a, 70b atteint le fond d'une encoche 71 a, 71 b, de réaliser parallèlement au blocage de la vertèbre 23 par le connecteur 50, un blocage entre la structure support 20 et ledit connecteur 50.

Selon une autre spécificité avantageuse de l'invention, chaque encoche 71 a, 71 b s'étend sur toute l'épaisseur de la vertèbre 23 (figure 2).

L'intérêt d'une telle caractéristique est de rendre chaque encoche 71a, 71 b particulièrement accessible, ce qui donne la possibilité de réaliser la déformation associée 70a, 70b suivant de multiples directions, par exemple parallèlement ou perpendiculairement au plan du balai 1.

De préférence, le connecteur 50 est réalisé en matériau thermoplastique.

Il est entendu que l'invention concerne plus généralement tout dispositif d'essuie-glace notamment pour véhicule automobile, qui comporte au moins un balai d'essuie-glace 1 tel que précédemment décrit.

Ceci étant, l'invention est par ailleurs relative à un procédé de fabrication d'un balai d'essuie-glace 1 comportant une structure support 20 dans laquelle est insérée longitudinalement une vertèbre flexible 23, et sur les côtés de laquelle sont ménagées des ouvertures 25a, 25b, 26a, 26b, 27a, 27b laissant apparaître les bords latéraux 23a, 23b de la vertèbre 23, ainsi qu'un connecteur 50 qui est emboîté sensiblement transversalement sur la structure support 20 au niveau des ouvertures 25a, 25b, 26a, 26b, et qui est bloqué en déplacement suivant sa direction d'emboîtement par les portions des bords latéraux 23a, 23b dépassant desdites ouvertures 25a, 25b, 26a, 26b.

Ce procédé de fabrication est remarquable en ce qu'il comporte une étape consistant à déformer au moins une portion de connecteur 50, formant déformation 70a, 70b, jusqu'à ce qu'elle pénètre dans une encoche 71a, 71 b qui est ménagée le long de la vertèbre 23 et qui est accessible à travers le structure support 20 via une ouverture 27a, 27b.

Selon une particularité de ce procédé de fabrication, l'étape de déformation consiste à réaliser de chaque côté du connecteur 50, au moins une déformation 70a, 70b qui coopère avec une encoche 71 a, 71 b ménagée au niveau du bord latéral correspondant 23a, 23b de la vertèbre 23.

La finalité est ici de disposer d'au moins deux déformations 70a, 70b s'étendant dans deux encoches 71 a, 71b respectivement ménagées au niveau de chacun des bords latéraux 23a, 23b de la vertèbre 23.

Selon une autre particularité du procédé de fabrication objet de l'invention, l'étape de déformation consiste à réaliser sur le connecteur 50 au moins deux déformations 70a, 70b qui sont sensiblement symétriques l'une de l'autre par rapport au plan du balai d'essuie-glace 1, et qui coopèrent avec deux encoches 71 a, 71 b ménagées sensiblement en vis-à-vis de part et d'autre de la vertèbre 23.

De manière particulièrement avantageuse, chaque déformation 70a, 70b est réalisée suivant une direction sensiblement perpendiculaire au corps du balai d'essuie-glace 1.

Cette caractéristique permet de déformer chaque portion de connecteur 50 qui est destinée à constituer une déformation au sens de l'invention, de la manière la plus directe qui soit par rapport à l'encoche 71 a, 71 b qui est vouée à la recevoir. L'objectif est d'optimiser la pénétration de la matière à travers l'ouverture 27a, 27b dans un premier temps, puis au sein de l'encoche 71 a, 71b dans un second temps.

Conformément à un mode de réalisation actuel de l'invention, chaque déformation 70a, 70b est réalisée suivant une direction sensiblement parallèle au plan du balai d'essuie-glace 1.

Ainsi positionnée, chaque déformation 70a, 70b n'est pas visible quand on regarde le balai d'essuie-glace 1 sur le côté, et elle est cachée par l'adaptateur 60 lorsqu'on observe par le dessus. Cela constitue un avantage significatif au point de vue esthétique.

Selon une autre particularité du procédé de fabrication, chaque déformation 70a, 70b est réalisée postérieurement à la mise en place et au verrouillage du connecteur 50 sur la structure support 20.

De préférence, chaque déformation 70a, 70b est réalisée par soudure ultrason.

Mais selon une première variante de réalisation, chaque déformation 70a, 70b peut aussi être réalisée par formage à chaud.

Il est à noter que ces deux solutions sont parfaitement adaptées dès lors que le connecteur 50 est en plastique.

Conformément cette fois à une seconde variante de réalisation, chaque déformation 70a, 70b pourrait également être réalisée par formage à froid.

Dans cette hypothèse, l'utilisation d'un connecteur 50 en métal s'avère alors particulièrement indiquée.

## Revendications

1. Balai d'essuie-glace (1) comportant une structure support (20) dans laquelle est insérée longitudinalement une vertèbre flexible (23), et sur les côtés de laquelle sont ménagées des ouvertures (25a, 25b, 26a, 26b, 27a, 27b) laissant apparaître les bords latéraux (23a, 23b) de la vertèbre (23), ainsi qu'un connecteur (50) qui est emboîté sensiblement transversalement sur la structure support (20) au niveau des ouvertures (25a, 25b, 26a, 26b), et qui est bloqué en déplacement suivant sa direction d'emboîtement par les portions de bords latéraux (23a, 23b) qui dépassent desdites ouvertures (25a, 25b, 26a, 26b), **caractérisé en ce que** le connecteur (50) comporte au moins une déformation (70a, 70b) réalisée par déformation locale du connecteur (50) après assemblage du connecteur (50) sur le balai d'essuie-glace (1), ladite déformation (70a, 70b) s'étendant à l'intérieur d'une encoche (71 a, 71 b) qui est ménagée sur la vertèbre (23) au niveau d'une portion de bord latéral (23a, 23b) accessible via une ouverture (27a, 27b).

2. Balai d'essuie-glace (1) selon la revendication 1, **caractérisé en ce qu'**au moins une encoche (71 a, 71 b) est ménagée sur chaque bord latéral (23a, 23b) de la vertèbre (23), et **en ce qu'**une déformation (70a, 70b) s'étend à l'intérieur de chaque encoche (71 a, 71 b).

3. Balai d'essuie-glace (1) selon l'une des revendications 1 ou 2, **caractérisé en ce qu'**au moins deux encoches (71a, 71b) symétriques l'une par rapport à l'autre sont respectivement ménagées sur chaque bord latéral (23a, 23b) de la vertèbre (23), et **en ce qu'**une déformation (70a, 70b) s'étend à l'intérieur de chaque encoche (71 a, 71b).

4. Balai d'essuie-glace (1) selon l'une quelconque des revendications 1 à 3, **caractérisé en ce qu'**au moins une encoche (71a, 71b) de la vertèbre (23) est ménagée en regard d'une ouverture (27a, 27b), de la structure support (20), exclusivement dédiée à son accès.

5. Balai d'essuie-glace (1) selon l'une quelconque des revendications 1 à 4, **caractérisé en ce qu'**au moins une encoche (71a, 71 b) de la vertèbre (23) présente une taille sensiblement identique à celle de l'ouverture (27a, 27b) qui lui est associée.

6. Balai d'essuie-glace (1) selon l'une quelconque des revendications 1 à 5, **caractérisé en ce qu'**au moins une encoche (71 a, 71 b) s'étend sur toute l'épaisseur de la vertèbre (23).

7. Balai d'essuie-glace (1) selon l'une quelconque des revendications 1 à 6, **caractérisé en ce que** le connecteur (50) est réalisé en matériau thermoplastique.

8. Dispositif d'essuie-glace notamment pour véhicule automobile, **caractérisé en ce qu'**il comporte au moins un balai d'essuie-glace (1) selon l'une quelconque des revendications précédentes.

9. Procédé de fabrication d'un balai d'essuie-glace (1) comportant une structure support (20) dans laquelle est insérée longitudinalement une vertèbre flexible (23), et sur les côtés de laquelle sont ménagées des ouvertures (25a, 25b, 26a, 26b, 27a, 27b) laissant apparaître les bords latéraux (23a, 23b) de la vertèbre (23), ainsi qu'un connecteur (50) qui est emboîté sensiblement transversalement sur la structure support (20) au niveau des ouvertures (25a, 25b, 26a, 26b), et qui est bloqué en déplacement suivant sa direction d'emboîtement par les portions des bords latéraux (23a, 23b) dépassant desdites ouvertures (25a, 25b, 26a, 26b), **caractérisé en ce qu'**il comporte une étape consistant à déformer au moins une portion de connecteur (50), formant déformation (70a, 70b), jusqu'à ce qu'elle pénètre dans une encoche (71a, 71b) qui est ménagée sur la vertèbre (23) au niveau d'une portion de bord latéral (23a, 23b) accessible via une ouverture (27a, 27b).

10. Procédé de fabrication selon la revendication 9, **caractérisé en ce que** l'étape de déformation consiste à réaliser de chaque côté du connecteur (50), au moins une déformation (70a, 70b) qui coopère avec une encoche (71a, 71b) ménagée au niveau du bord latéral correspondant (23a, 23b) de la vertèbre (23).

11. Procédé de fabrication selon l'une des revendications 9 ou 10, **caractérisé en ce que** l'étape de déformation consiste à réaliser sur le connecteur (50) au moins deux déformations (70a, 70b) qui sont sensiblement symétriques l'une de l'autre par rapport au plan du balai d'essuie-glace (1), et qui coopèrent avec deux encoches (71 a, 71b) ménagées sensiblement en vis-à-vis de part et d'autre de la vertèbre (23).

12. Procédé de fabrication selon l'une quelconque des revendications 9 à 11, **caractérisé en ce que** chaque déformation (70a, 70b) est réalisée suivant une direction sensiblement perpendiculaire au corps du balai d'essuie-glace (1).

13. Procédé de fabrication selon l'une quelconque des revendications 9 à 12, **caractérisé en ce que** chaque déformation (70a, 70b) est réalisée suivant une direction sensiblement parallèle au plan du balai d'essuie-glace (1).

14. Procédé de fabrication selon l'une quelconque des revendications 9 à 13, **caractérisé en ce que** chaque déformation (70a, 70b) est réalisée postérieurement à la mise en place et au verrouillage du connecteur sur la structure support.

15. Procédé de fabrication selon l'une quelconque des revendications 9 à 14, **caractérisé en ce que** chaque déformation (70a, 70b) est réalisée par soudure ultrason.

16. Procédé de fabrication selon l'une quelconque des revendications 9 à 15, **caractérisé en ce que** chaque déformation (70a, 70b) est réalisée par formage à chaud.

17. Procédé de fabrication selon l'une quelconque des revendications 9 à 16, **caractérisé en ce que** chaque déformation (70a, 70b) est réalisée par formage à froid.

## Claims

1. A wiper blade (1) that comprises a bearing structure (20) wherein a flexible vertebra (23) is longitudinally inserted and on the sides of which openings (25a, 25b, 26a, 26b, 27a, 27b) are arranged, thus exposing the side edges (23a, 23b) of the vertebra (23), as well as a connector (50) that is fitted substantially transversally onto the bearing structure (20) at the level of the openings (25a, 25b, 26a, 26b) and that is blocked in terms of movement in the fitting direction thereof by the portions of the side edges (23a, 23b) protruding from said openings (25a, 25b, 26a, 26b), **characterised in that** the connector (50) includes at least one deformation (70a, 70b) obtained by a local deformation of the connector (50) after assembling the connector (50) on the wiper blade (1), with said deformation extending inside a notch (71a, 71b) which is formed on the vertebra (23) at the level of a portion of a side edge (23a, 23b) accessible via an opening (27a, 27b).

2. A wiper blade (1) according to claim 1, **characterised in that** at least one notch (71a, 71b) is formed on each side edge (23a, 23b) of the vertebra (23) and **in that** a deformation (70a, 70b) extends inside each notch (71a, 71b).

3. A wiper blade (1) according to one of claims 1 or 2, **characterized in that** at least two notches (71a, 71b), symmetrical with respect to each other, are respectively formed on each side edge (23a, 23b) of the vertebra (23), and **in that** a deformation (70a, 70b) extends inside each notch (71a, 71b).

4. A wiper blade (1), according to any one of claims 1 to 3, characterised that at least one notch (71a, 71b) of the vertebra (23) is formed opposite an opening (27a, 27b) of the bearing structure (20), exclusively dedicated to the access thereof.

5. A wiper blade (1) according to any one of claims 1 to 4, **characterised in that** at least one notch (71a, 71b) of the Vertebra (23), has a size substantially identical to that of the opening (27a, 27b) which is associated therewith.

6. A wiper blade (1) according to any one of claims 1 to 5, **characterised in that** at least one notch (71a, 71b) extends on the whole thickness of the vertebra (23).

7. A wiper blade (1), according to any one of claims 1 to 6, **characterised in that** that the connector (50) is made of a thermoplastic material.

8. A swiping device, more particularly for a motor vehicle, **characterised in that** it includes at least one windscreen wiper blade (1) according to any one of the preceding claims.

9. A method for producing a wiper blade (1) including a bearing structure (20) wherein a flexible vertebra (23) is longitudinally inserted, and on the sides of which openings (25a, 25b, 26a, 26b, 27a, 27b) are formed, thus exposing the side edges (23a, 23b) of the vertebra (23), as well as a connector (50) which is fitted substantially transversally onto the bearing structure (20) at the level of the openings (25a, 25b, 26a, 26b) and which is locked in terms of movement in the fitting direction thereof by the portions of the side edges (23a, 23b) protruding from said openings (25a, 25b, 26a, 26b), **characterised in that** it includes a step consisting in deforming at least one portion of the connector (50), creating a deformation (70a, 70b) until the latter enters a notch (71a, 71b) which is formed on the vertebra (23) at the level of a portion of a side edge (23a, 23b) accessible via an opening (27a, 27b).

10. A production method according to claim 9, **characterised in that** the step of deformation consists in forming on each side of the connector (50) at least one deformation (70a, 70b) which cooperates with a notch (71a, 71b) formed at the level of the matching side edge (23a, 23b) of the vertebra (23).

11. A production method, according to one of claims 9 or 10, **characterised in that** the step of deformation consists in forming on the connector (50) at least two deformations (70a, 70b) which are substantially symmetrical with respect to each other in the plane of the wiper blade (1), and which cooperate with two notches (71a, 71b) formed substantially opposite each other on either side of the vertebra (23).

12. A production method, according to any one of claims 9 to 11, **characterised in that** each deformation (70a, 70b) is provided along a direction substantially perpendicular to the body of the wiper blade (1).

13. A production method, according to any one of claims 9 to 12, **characterised in that** each deformation (70a, 70b) is provided according to a direction substantially parallel to the plane of the wiper blade (1).

14. A production method, according to any one of claims 9 to 13, **characterised in that** each deformation (70a, 70b) is provided after the positioning and the blocking of the connector on the bearing structure.

15. A production method, according to any one of claims 9 to 14, **characterised in that** each deformation (70a, 70b) is provided by ultrasonic welding.

16. A production method, according to any one of claims 9 to 15, **characterised in that** each deformation (70a, 70b) is provided by hot forming.

17. A production method, according to any one of claims 9 to 16, **characterised in that** each deformation (70a, 70b) is provided by cold forming.

## Patentansprüche

1. Scheibenwischerarm (1) mit einer Trägerstruktur (20), in der in Längsrichtung ein flexibler Wirbel (23) eingeführt ist und auf deren Seiten Öffnungen (25a, 25b, 26a, 26b, 27a, 27b) ausgespart sind, aus denen die lateralen Ränder (23a, 23b) des Wirbels (23) zu sehen sind, sowie ein Anschlussglied (50), das deutlich transversal auf der Trägerstruktur (20) in den Öffnungen (25a, 25b, 26a, 26b) eingerastet ist, und das in der Verschiebung gemäß seiner Einrastrichtung durch die Abschnitte der lateralen Ränder (23a, 23b) blockiert ist, die aus den genannten Öffnungen (25a, 25b, 26a, 26b) hervorstehen, **dadurch gekennzeichnet, dass** das Anschlussglied (50) wenigstens eine Verformung (70a, 70b) umfasst, die per lokaler Verformung des Anschlussgliedes (50) nach der Montage des Anschlussgliedes (50) auf dem Scheibenwischerarm (1) umfasst, wobei sich die genannte Verformung (70a, 70b) im Innern einer Einkerbung (71a, 71b) erstreckt, die auf dem Wirbel (23) bei einem Abschnitt des lateralen Randes (23a, 23b) ausgespart ist, der über eine Öffnung (27a, 27b) zugänglich ist.

2. Scheibenwischerarm (1) gemäß Anspruch 1, **dadurch gekennzeichnet, dass** wenigstens eine Einkerbung (71a, 71b) auf jedem lateralen Rand (23a, 23b) des Wirbels (23) ausgespart ist, und dass sich eine Verformung (70a, 70b) im Innern jeder Einkerbung (71a, 71b) erstreckt.

3. Scheibenwischerarm (1) gemäß Anspruch 1 oder 2, **dadurch gekennzeichnet, dass** wenigstens zwei im Verhältnis zueinander symmetrische Einkerbungen (71a, 71b) jeweils auf jedem lateralen Rand (23a, 23b) des Wirbels (23) ausgespart sind und dass sich eine Verformung (70a, 70b) im Innern jeder Einkerbung (71a, 71b) erstreckt.

4. Scheibenwischerarm (1) gemäß Anspruch 1 bis 3, **dadurch gekennzeichnet, dass** wenigstens eine Einkerbung (71a, 71b) des Wirbels (23) gegenüber einer Öffnung (27a, 27b) der Trägerstruktur (20) ausgespart ist, die ausschließlich für ihren Zugang bestimmt ist.

5. Scheibenwischerarm (1) gemäß Anspruch 1 bis 4, **dadurch gekennzeichnet, dass** wenigstens eine Einkerbung (71a, 71b) des Wirbels (23) eine deutlich identische Größe zu der der ihr zugeordneten Öffnung (27a, 27b) aufweist.

6. Scheibenwischerarm (1) gemäß Anspruch 1 bis 5, **dadurch gekennzeichnet, dass** sich wenigstens eine Einkerbung (71a, 71b) über die gesamte Dicke des Wirbels (23) erstreckt.

7. Scheibenwischerarm (1) gemäß Anspruch 1 bis 6, **dadurch gekennzeichnet, dass** das Anschlussglied (50) aus thermoplastischem Material realisiert ist.

8. Scheibenwischervorrichtung, insbesondere für ein Kraftfahrzeug, **dadurch gekennzeichnet, dass** sie wenigstens einen Scheibenwischerarm (1) gemäß einem der vorherigen Ansprüche umfasst.

9. Herstellungsverfahren eines Scheibenwischerarms (1) mit einer Trägerstruktur (20), in der in Längsrichtung ein flexibler Wirbel (23) eingeführt ist, und auf deren Seiten Öffnungen (25a, 25b, 26a, 26b, 27a, 27b) ausgespart sind, aus denen die lateralen Ränder (23a, 23b) des Wirbels (23) zu sehen sind, sowie ein Anschlussglied (50), das deutlich transversal auf der Trägerstruktur (20) in den Öffnungen (25a, 25b, 26a, 26b) zum Einrasten kommt, und das in Verschiebung gemäß seiner Einrastrichtung durch die Abschnitte der lateralen Ränder (23a, 23b) blockiert ist, die aus den genannten Öffnungen (25a, 25b, 26a, 26b) hervorstehen, **dadurch gekennzeichnet, dass** es eine Stufe umfasst, die in der Verformung wenigstens eines Abschnitts des Anschlussgliedes (50) besteht, das eine Verformung (70a, 70b) formt, bis er in eine Einkerbung (71a, 71b) eindringt, die auf dem Wirbel (23) bei einem Abschnitt des lateralen Randes (23a, 23b) ausgespart ist, der über eine Öffnung (27a, 27b) zugänglich ist.

10. Herstellungsverfahren gemäß Anspruch 9, **dadurch gekennzeichnet, dass** die Verformungsstufe aus der Realisierung wenigstens einer Verformung (70a, 71b) auf jeder Seite des Anschlussgliedes (50) besteht, die mit einer Einkerbung (71a, 71b) zusammenwirkt, die an dem dem Wirbel (23) entsprechenden lateralen Rand (23a, 23b) ausgespart ist.

11. Herstellungsverfahren gemäß Anspruch 9 oder 10, **dadurch gekennzeichnet, dass** die Verformungsstufe in der Realisierung wenigstens von zwei Verformungen (70a, 70b) auf dem Anschlussglied (50) besteht, die untereinander im Verhältnis zur Ebene des Scheibenwischerarms (1) deutlich symmetrisch sind und die mit zwei Einkerbungen (71a, 71b) zusammenwirken, die auf jeder Seite des Wirbels (23) deutlich gegenüber ausgespart sind.

12. Herstellungsverfahren gemäß Anspruch 9 bis 11, **dadurch gekennzeichnet, dass** jede Verformung (70a, 70b) gemäß einer deutlich zum Körper des Scheibenwischerarms (1) lotrechten Richtung realisiert ist.

13. Herstellungsverfahren gemäß Anspruch 9 bis 12, **dadurch gekennzeichnet, dass** jede Verformung (70a, 70b) gemäß einer deutlich zur Ebene des Scheibenwischerarms (1) parallelen Richtung realisiert ist.

14. Herstellungsverfahren gemäß Anspruch 9 bis 13, **dadurch gekennzeichnet, dass** jede Verformung (70a, 70b) nach dem Einsetzen und der Verriegelung des Anschlussgliedes auf der Trägerstruktur realisiert ist.

15. Herstellungsverfahren gemäß Anspruch 9 bis 14, **dadurch gekennzeichnet, dass** jede Verformung (70a, 70b) durch Ultraschall-Verschweißen realisiert ist.

16. Herstellungsverfahren gemäß Anspruch 9 bis 15, **dadurch gekennzeichnet, dass** jede Verformung (70a, 70b) durch Heißverformen realisiert ist.

17. Herstellungsverfahren gemäß Anspruch 9 bis 16, **dadurch gekennzeichnet, dass** jede Verformung (70a, 70b) durch Kaltverformen realisiert ist.
